# EUROPÄISCHE PATENTANMELDUNG

(11) **EP 0 690 543 A1**
(43) Veröffentlichungstag der Anmeldung: **03.01.1996**
(21) Anmeldenummer: 95810377.2
(22) Anmeldetag: 08.06.1995
(51) Int. Cl.: H02K 1/20

(54) **Statorblechkörper einer elektrischen Maschine**

(30) Priorität: 28.06.1994 DE 4422543
(71) Anmelder: ABB Management AG, CH-5401 Baden (CH)
(72) Erfinder: Baer, Jürgen, CH-5506 Mellingen (CH); von Wolfersdorf, Jens, Dr., CH-5417 Untersiggenthal (CH)

(57) **Zusammenfassung**

Bei einem Statorblechkörper einer elektrischen Maschine mit in Nuten im Statorblechkörper eingelegten und mittels Nutverschlusskeilen (12) darin gehaltenen Statorwicklungsleitern (10,11), sind radiale Ventilationskanäle (4a,4b) zwischen den einzelnen Teilblechkörpern (1,2, siehe Fig.1) vorgesehen. Diese sind durch radial verlaufende Distanzstege (3, bestehend aus 3a,3b) gebildet.

Um die einseitige Umströmung der Wicklungsleiter (10,11) und Rückströmungen zum Maschinenluftspalt (5) hin zu vermeiden, ist am radial innenliegenden Ende des Distanzsteges (3) eine Oeffnung (14) vorgesehen. Optional ist das besagte Ende des Distanzsteges in Gegenrichtung zur Drehrichtung (R) des Rotors hin gekrümmt.

Die Kühlwirkung kann zusätzlich gesteigert werden, wenn die Nutverschlusskeile (12) im Bereich der Ventilationskanäle eine keilförmige Ausnehmung (15) aufweisen.

## Beschreibung

### TECHNISCHES GEBIET

Die Erfindung bezieht sich auf einen Statorblechkörper einer elektrischen Maschine mit in Nuten im Statorblechkörper eingelegten und mittels Nutverschlusskeilen darin gehaltenen Statorwicklungsleitern, wobei die Nutverschlusskeile gegenüber der Statorbohrung zurückversetzt sind, welcher Statorblechkörper aus einzelnen Teilblechkörpern besteht, die durch radiale Ventilationskanäle oder Kühlschlitze voneinander distanziert sind, wobei zur Distanzierung annähernd radial verlaufende Distanzstege vorgesehen sind, die fest mit einer der beiden einander zugewandten Stirnflächen der Teilblechkörper verbunden sind, welche Distanzstege die besagten Ventilationkanäle in eine Vielzahl Teilkanäle unterteilen, wobei die axial verlaufenden Stege bzw. Schenkel der Distanzstege die Trennung zwischen den Teilkanälen bewirken.

Statorblechkörper dieser Gattung sind beispielsweise aus dem Buch von Wiedemann/Kellenberger "Konstruktion elektrischer Maschinen", Springer-Verlag Berlin/Heidelberg/New York 1967, Seiten 262 - 264, insbesondere Abb. 171 auf Seite 264, bekannt.

### TECHNOLOGISCHER HINTERGRUND UND STAND DER TECHNIK

Bei rotierenden elektrischen Maschinen ist je nach Ventilationsart des Stators die Schichtung der Statorbleche über die ganze Eisenlänge durchgehend, und die Kühloberfläche wird durch Ventilationslöcher im Blechrücken oder in der Zähnen, durch Vornuten oder durch Vergrösserung der Eisenoberfläche erzeugt, oder die Eisenlänge ist durch radiale Ventilationskanäle oder Kühlschlitze in einzelne Pakete unterteilt. Diese Ventilationskanäle werden durch Distanzstege gebildet, die auf einer Kanalseite auf einem Endblech durch Aufnieten oder Punktschweissen befestigt sind. Die axiale Dicke der Distanzstege ist durch thermische Ueberlegungen bestimmt und beträgt zwischen 6 und 20 mm, manchmal bis 30 mm.

Die Distanzstege sind bei kleineren Maschinen ganz und bei grösseren Maschinen im Bereich der niedrigeren magnetischen Induktion im Blechrücken aus Eisen und im Bereich der Zähne mit der höheren Induktion aus Messing oder nichtmetallischem Werkstoff. Nach Weidemann/Kellenberger hat dabei die Ausbildung der Distenzstege Rücksicht zu nehmen auf den Pressdruck während des Blechens (die Stege dürfen nicht auskippen) und auf niederen Kühlmittel-Strömungswiderstand und -Geräusch (Abrunden von Ein- und Austrittskanten, vgl. S.264, Absatz 1, a.a.O.).

Es hat sich nun gezeigt, dass die im besagten Buch angedeuteten Lösungen (Abrundung der radial innen liegenden Distanzstegenden) bei den ständig wachsenden Einheitsleistungen längst nicht ausreichen, um eine genügende Kühlung zu gewährleisten. Insbesondere stellt sich dabei das Problem, das heisse Kühlgas aus dem Maschinenluftspalt abzuführen. Hier muss nämlich das im Maschinenluftspalt mehrheitlich in Umfangsrichtung strömende Gas abrupt in radialer Richtung umgelenkt werden.

### KURZE DARSTELLUNG DER ERFINDUNG

Der Erfindung liegt die Aufgabe zugrunde, einen Statorblechkörper der eingangs genannten Gattung zu schaffen, der auf einfach und wirtschaftliche Weise optimal gekühlt werden kann.

Diese Aufgabe wird erfindungsgemäss dadurch gelöst, dass am radial innenliegenden Ende des Distanzsteges eine Oeffnung vorgesehen ist, oder der Distanzsteg dort unterbrochen ist, welche Oeffnung bzw. Unterbrechung in Umfangsrichtung benachbarte Teilkanäle miteinander verbindet.

Durch diese besondere Ausbildung des luftspaltseitigen Endabschnitts der Distanzstege wird der Strömungswideratand im Statorkühlschlitz drastisch reduziert. Die am Eintritt in den Kühlkanal vorhandene stark ausgebildete Kontraktion der Strömung wird auf diese Weise gemildert oder ganz behoben. Zudem wird dort mehr dynamischer Druck in statischen Druck umgesetzt. Eine weiterer Vorteil besteht darin, dass eine mögliche Kühlgasrückströmung vermieden wird.

Die Erfindung ist insbesondere für Statorblechkörper mit sogenannter Vornut geeignet, d.h. Anordnungen, bei denen die Nutverschlusskeile nicht bündig mit den Statorzähnen, sondern radial zurückversetzt sind.

Ausführungsbeispiele der Erfindung sowie die damit erzielbaren Vorteile werden nachfolgend anhand der Zeichnung näher erläutert.

### KURZE BESCHREIBUNG DER ZEICHNUNG

In der Zeichnung sind Ausführungsbeispiele der Erfindung schematisch dargestellt, und zwar zeigt:
Fig.1 einen teilweisen Längsschnitt durch einen bekannten aus Teilblechkörpern bestehenden Statorkörper einer rotierenden elektrischen Maschine;
Fig.2 eine Draufsicht auf ein mit Statornuten und Distanzstegen versehenes Blechsegment im verkleinerten Massstab;
Fig.3 einen vergrösserten mehr ins Detail gehenden Ausschnitt aus Fig.2 zur Verdeutlichung der Problematik, die der Erfindung zugrundeliegt;
Fig.4 einen Längsschnitt durch einen Kühlschlitz gemäss Fig.3 längs deren Linie AA;
Fig.5 erstes Ausführungsbeispiel der Erfindung mit einem über seine gesamte Länge geraden Distanzsteg mit I-Profil, der am luftspaltseitigen Endabschnitt mit einer Oeffnung versehen oder dort unterbrochen ist;
Fig.6 ein zweites Ausführungsbeispiel mit einem Distanzsteg mit I-Profil, der an seinem luftspaltseitigen Endabschnitt Oeffnungen aufweist-und zusätzlich entgegen der Drehrichtung des Rotors gekrümmt ist;
Fig.7 ein drittes Ausführungsbeispiel der Erfindung, der mit einer Oeffnung gemäss Fig.l oder Fig.2 versehen ist, wobei das radial innere Ende des äusseren Distanzstegabschnitts entgegen der Drehrichtung des Rotors gekrümmt ist;
Fig.8 ein viertes Ausführungsbeisiel als Weiterbildung der Anordnung nach Fig.6, bei dem zusätzlich die Nutverschlusskeile im Bereich der Kühlschlitze mit keilförmigen Ausnehmungen versehen sind;
Fig.9 eine perspektivische Darstellung eines mit einer keilförmigen Ausnehmungen versehenen Nutverschlusskeils;
Fig.10 eine ausschnittsweise Draufsicht auf einen Kühlschlitz, den ein Nutverschlusskeil gemäss Fig.9 durchsetzt.

### WEGE ZUR AUSFÜHRUNG DER ERFINDUNG

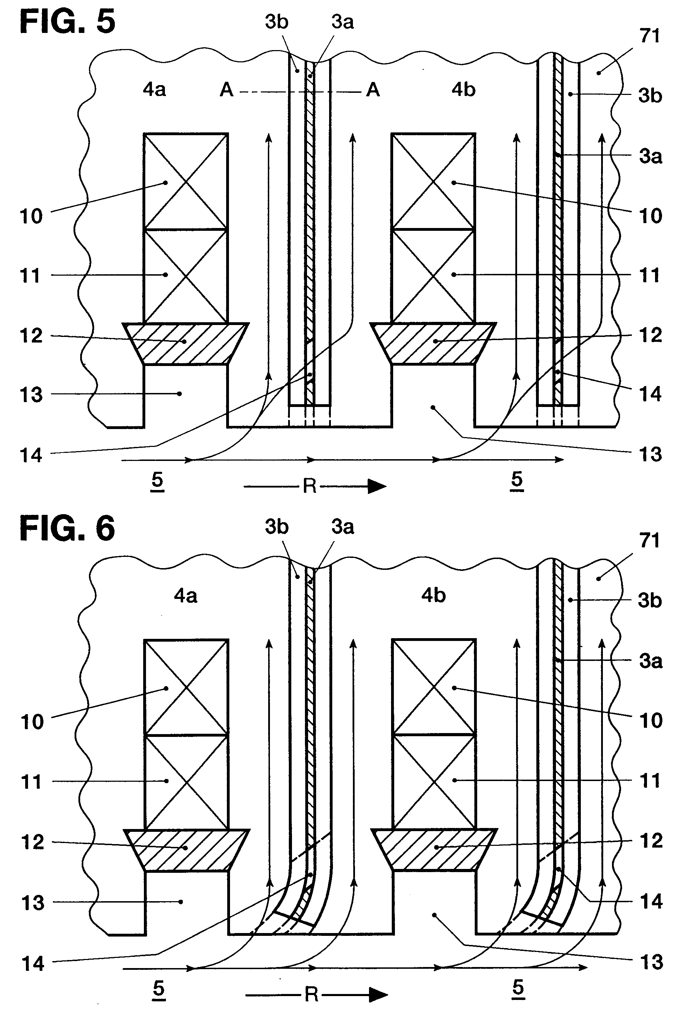

Im teilweisen Längsschnitt durch einen aus Teilblechkörpern 1,2 aufgebauten Statorblechkörpers einer rotierenden elektrischen Maschine, z.B. einem luftgekühlten Turbogenerator, sind die Teilblechkörper mittels Distanzstegen 3 voneinander distanziert. Diese bestehen im Beispielsfall aus I-Profilen mit einem Steg 3a und zwei parallelen Schenkeln 3b. Anstelle von I-Profilen können auch andere Profilformen, z.B. L-Profil oder U-Profil, vorgesehen sein (vgl. auch den Schnitt AA gemäss Fig.4). Auf diese Weise werden radial verlaufende Ventilationskanäle oder Kühlschlitze 4 geschaffen, durch welche Kühlgas vom Maschinenluftspalt 5 zwischen Statorblechkörper und Rotor 6 geleitet werden kann. Dabei unterteilen die axial verlaufenden Stege 3a (oder Schenkel bei L- oder U-Profil) der Distanzstege 3 diese Kühlschlitze in eine Vielzahl von Teilkanälen 4a, 4b,.., die durch die besagten Stege 3a voneinander getrennt sind.

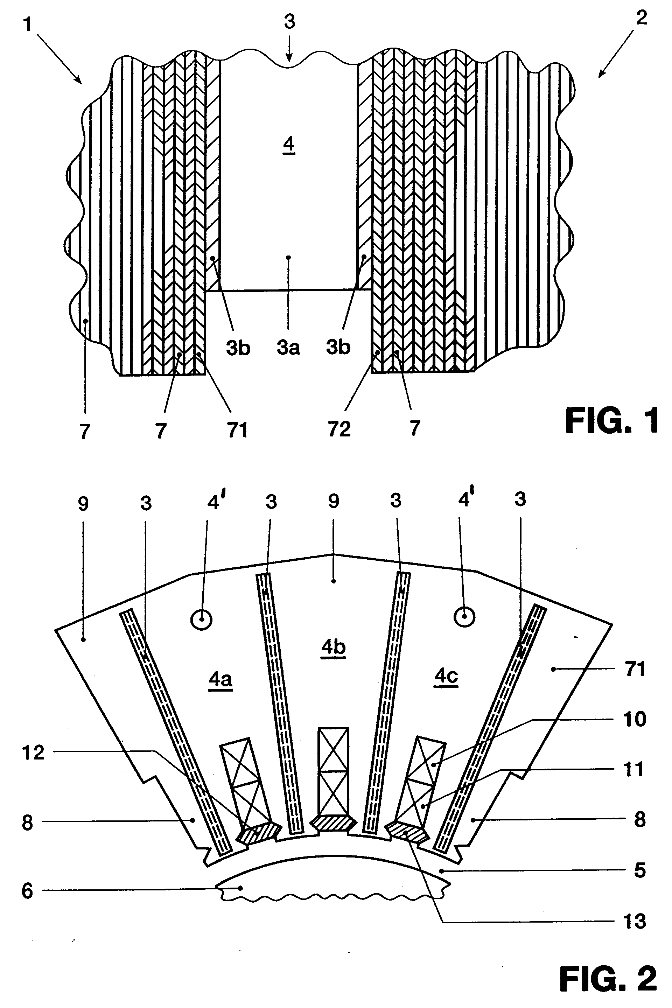

Die Teilblechkörper 1,2 selbst bestehen aus einer Vielzahl aufeinander gestapelter Bleche 7, sogenannter Elektro- oder Dynamobleche, mit einer Dicke von typisch 0,5 mm. Bei grossen elektrischen Maschinen besteht dabei jede Blechlage aus mehreren Blechsegmenten (vgl. Draufsicht gemäss Fig.2), die nach jeder Lage in Umfangsrichtung versetzt aufeinander liegen. Die Bleche 7 sind beidseits mit einer isolierenden Lackschicht (nicht eingezeichnet) versehen, um Blechschlüsse zu vermeiden. Die Distanzstege 3 sind normalerweise auf einem der beiden Endbleche 71 oder 72 aus dickerem Blech (typisch 1 mm) befestigt. Die (nicht massstäbliche) Draufsicht auf ein solches mit Distanzstegen 3 versehenes Endblechsegment 71 gemäss Fig.2 veranschaulicht die radiale Anordnung der Distanzstege 3, die sich praktisch über den gesamten Zahnbereich 8 des Segments 72 bis hin zum Blechrücken 9 erstrecken. Der Vollständigkeit halber sind in Fig.2 auch die in den Statornuten übereinanderliegenden Wicklungsstäbe 10, 11 und die Nutverschlusskeile 12 eingezeichnet. Diese Nutverschlusskeile 12 sind gegenüber der Statorbohrung radial nach aussen zurückversetzt, so dass zwischen letzterer und dem Nutverschlusskeil eine sogenannte Vornut 13 entsteht. Schliesslich sind auch Bohrungen 4' in Fig.2 eingezeichnet, durch welche die Pressbolzen des Stators geführt werden.

Insoweit sind elektrischen Maschinen bekannt und beispielsweise in dem eingangs genannten Buch "Konstruktion elektrischer Maschinen" a.a.O. beschrieben.

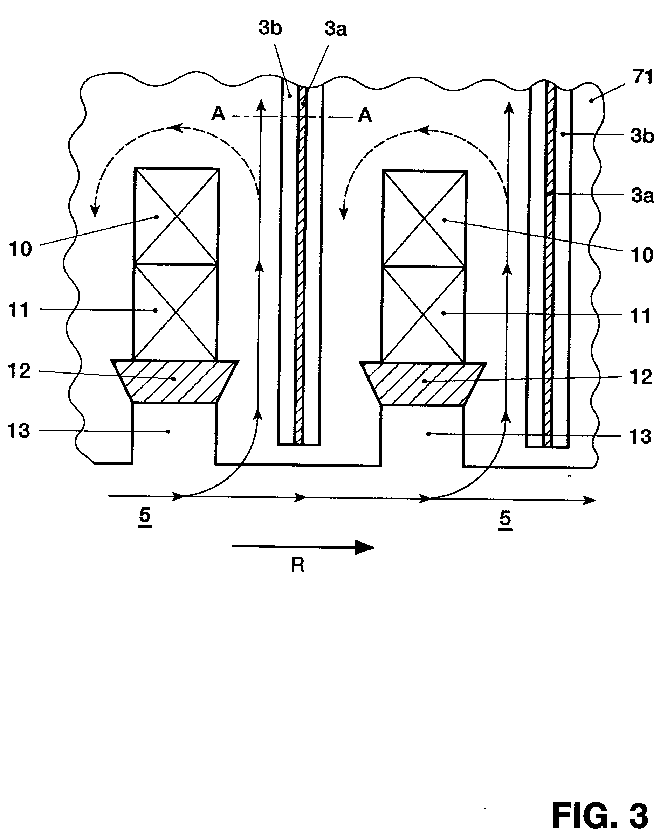

Mit Bezug auf die gegenüber Fig.2 vergrösserte Darstellung eines Ausschnitts gemäss Fig.3 soll nachstehend die der Erfindung zugrundeliegende Problematik erläutert werden. In dieser Figur ist die Drehrichtung des (hier nicht eingezeichneten Rotors 6) mit dem Pfeil R bezeichnet, die restlichen Pfeile symbolisieren die Kühlgasströmung aus dem Maschinenluftspalt 5 in die Teilkanäle 4, die begrenzt sind durch die Endbleche 71, 72 einerseits und die Stege 3a der Distanzstege 3.

Das Kühlgas strömt in Drehrichtung R des Rotors aus dem Maschinenluftspalt 5 in die Teilkanäle 4a, 4b,.. in Pfeilrichtung ein. Untersuchungen haben ergeben, dass sich dabei je nach Tiefe der Vornut 13 vorwiegend eine "einseitige" Durchströmung einstellt, d.h. die zu kühlenden Wicklungsleiter 10, 11 werden im wesentlichen nur einseitig umströmt. Diese einseitige Umströmung vermindert nicht nur den Wärmeaustausch zwischen Kühlgas und Leiter, sondern führt auch zu einer Rückströmung um die Leiter herum hin zum Maschinenluftspalt (in Fig.3 durch Strichlierung symbolisiert).

Um nun die Kühlung zu verbessern, sind gemäss Fig.5 in den Distanzstegen 3 an ihrem luftspaltseitigen Endabschnitt in etwa auf der Höhe des Nutverschlusskeils 12 im Steg 3a Durchbrüche oder Oeffnungen 14 vorgesehen, welche eine lokale Verbindung zwischen zwei in Umfangsrichtung benachbarten Teilkanälen bewirken 4a, 4b. Anstelle einer Oeffnungen oder eines Durchbruchs im Steg 3a kann der Distanzsteg 3 auch auf der radialen Höhe des Nutverschlusskeils 12 unterbrochen sein. Diese Oeffnungen 14 bzw. die die Oeffnung begrenzenden Enden der beiden Distanzstegteile sind vorzugsweise parallel zur Strömungsrichtung des Kühlgases abgeschrägt. Die Durchtrittsfläche der Oeffnung 14 bzw. des Unterbruchs liegt in der Grössenordnung einer radialen Abströmfläche eines Teilkanals 4a oder 4b, typisch liegt der Quotient von radialer Höhe der Oeffnung 14 und Breite des Kühlschlitzes zwischen den Werten 1 und 3.

Es stellt sich dann die in Fig.5 eingezeichnete beidseitige Umströmung der Wicklungsleiter 10, 11 ein. Rückströmungen werden mit Sicherheit vermieden.

Eine noch weitergehende Verbesserung der Kühlwirkung lässt sich erreichen, wenn neben den Oeffnungen 14 bzw. Unterbrüchen im luftspaltseitigen Endabschnitt der Distanzsteg 3 an seinem luftspaltseitigen Ende als Ganzes in Richtung entegen der Drehrichtung R des Rotors gekrümmt ist, wie es in Fig.6 dargestellt ist. Die Krümmung beginnt dabei an der Oeffung 14 und setzt sich bis kurz vor dem Maschinenluftspalt 5 fort, wo auch der Distanzsteg 3 endet. Um das Biegen des I-, L- oder U-förmigen Distanzsteges zu umgegen, können im gekrümmten Abschnitt die Stege 3b fortgelassen werden. Die Stege 3b enden dann an den in Fig.6 strichliert eingezeichneten Stellen auf der Höhe der dem Luftspalt abgewandte abgewandten Begrenzung der Oeffnung 14. Es stellt sich dann die in Fig.6 eingezeichnete beidseitige Umströmung der Wicklungsleiter 10, 11 ein und Rückströmungen werden mit Sicherheit vermieden.

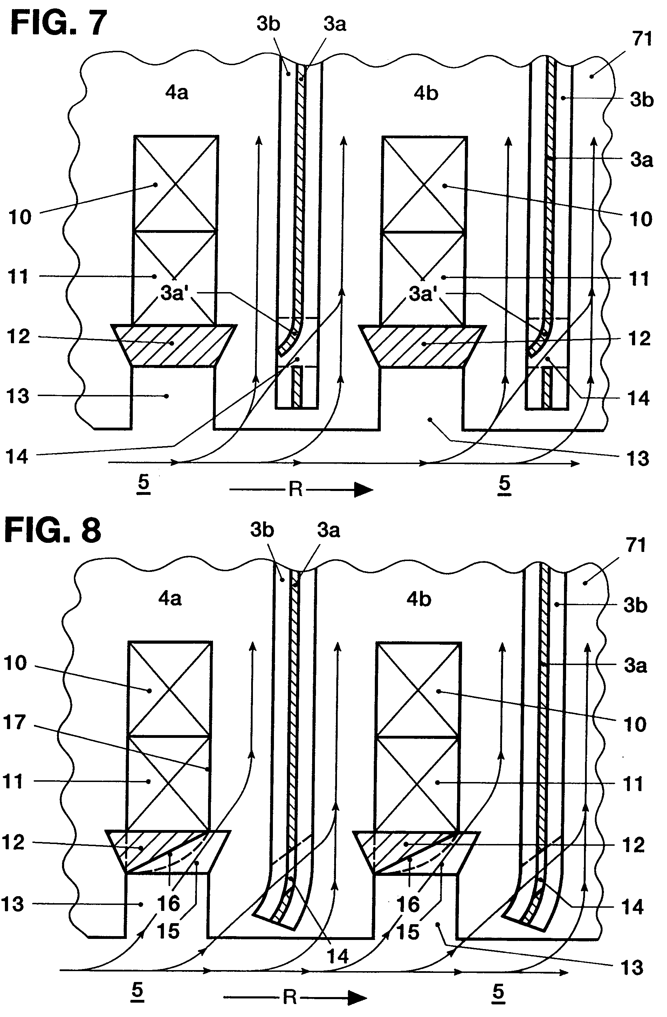

Die in Fig.7 dargestellte Variante der Erfindung stellt sich als Abwandlung der im Zusammenhang mit Figur 6 beschiebenen Gestaltung des Distanzsteges 3 dar. In Fig.7 verlaufen die Distanzstege 3 am luftspaltseitigen Ende geradlinig. Das Ende 3a' des radial äusseren Distanzstegabschnitts ist herausgebogen und entgegen der Drehrichtung R des Rotor gekrümmt. Hier bietet sich insbesondere eine zweiteilige Ausführung des Distanzsteges an. Die Schenkel 3b des radial äusseren Distanzstegteils enden an der Stelle, an welcher die Krümmung beginnt, das verlängerte Stegende ist wie angegeben gekrümmt. Der radial innere Distanzstegteil ist normal gestaltet und verläuft radial. Es kann gegebenenfalls gegenüber der Radialen um einen gewissen Winkel verschoben auf dem Endblech 71 oder 72 befestigt sein.

Auch hier stellt sich dann die in Fig.7 eingezeichnete beidseitige Umströmung der Wicklungsleiter 10, 11 ein und Rückströmungen werden mit Sicherheit vermieden.

Bei den bislang beschriebenen Ausführungsformen musste das in die Teilkanäle 4a, 4b,... einströmende Kühlgas um den den Kühlschlitz durchsetzen Nutverschlusskeil herumströmen. Zudem engt dieser den freien Strömungsquerschnitt aufgrund seiner durch seine Abstützfunktion vorgegebenen Geometrie, im Beispielsfall Trapezform, ein.

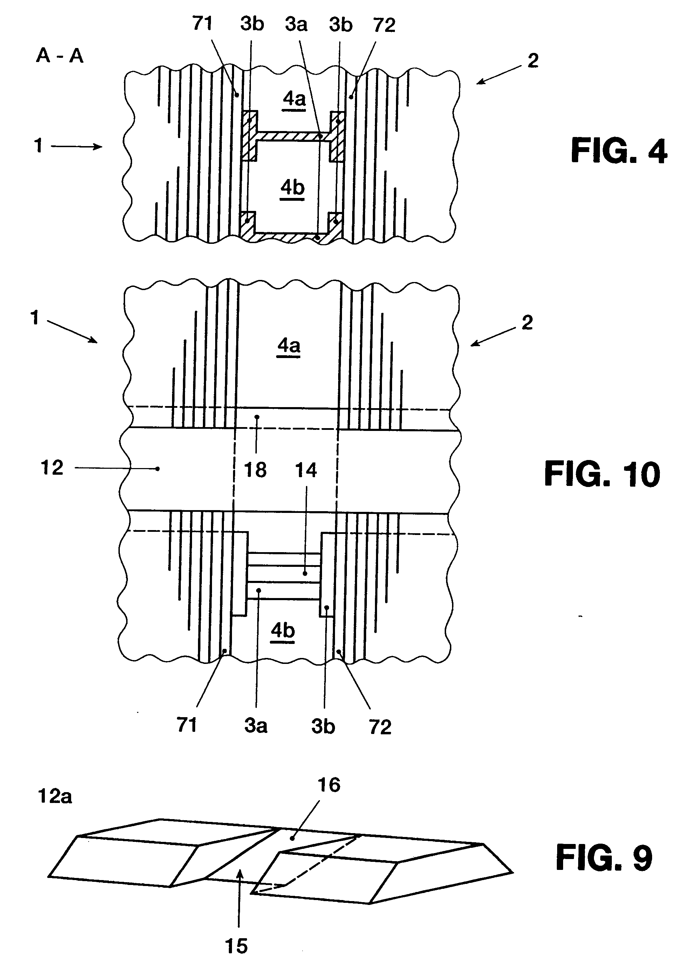

Eine weitere Verbesserung der Kühlwirkung lässt sich nun dadurch erzielen, wenn gemäss Fig.8 die Nutverschlusskeile 12 im Bereich der Kühlschlitze 4 eine beispielsweise keilförmige Ausnehmung 15 aufweisen, die sich in Drehrichtung R des Rotors 6 , also in Strömungsrichtung des Kühlgases, stetig erweitert. Die Keilspitze kommt an der einströmseitigen, dem Maschinenluftspalt 5 zugewandten Keilkante zu liegen. Abströmseitig endet die Keilfläche 16 an der Nutwand 17. Ein derart gestalteter Nutverschlusskeil ist in Fig.9 dargestellt, und Fig.10 zeigt eine ausschnittsweise Draufsicht von innen her auf einen Kühlschlitz, durch den ein solcher Nutverschlusskeil verläuft. Alternativ kann diese Ausnehmung auch statt mit ebener Keilfläche 16 auch konvex, also nach aussen gewölbt sein, was in Fig.8 durch Strichlierung angedeutet ist.

Eine weitere Verbesserung der Kühlwirkung lässt sich erreichen, wenn - wie in Fig.8 strichliert dargestellt - im Bereich des Kühlschlitzes (linke Hälfte der Teilkanäle 4a,4b...) der Nutverschlusskeil 12 eine Materialausnehmung aufweist, derart, dass er im Bereich des Kühlschlitzes mit der Nutwand 17 bündig ist.

Selbstverständlich lässt sich die beschriebene spezielle Ausgestaltung des Nutverschlusskeils 12 im Bereich der Kühlschlitze 4 auch bei allen anderen beschriebenen und in den Figuren 5,6 und 7 dargestellten Varianten verwenden. Die Erfindung beschränkt sich ferner nicht auf die in der Zeichnung dargestellte Profilform des Distanzsteges; sie lässt sich auch bei Distanzstegen mit L-, H- und anderen Profilformen realisieren.

### Bezeichnungsliste

- 1,2: Teilblechkörper
- 3: Distanzstege
- 3a: Steg von 3
- 3a': gekrümmtes Ende von 3a
- 3b: Schenkel von 3
- 4: Kühlschlitze zwischen 1 und 2
- 4a,4b,..: Teilkanäle
- 4': Bohrungen in 4a,...
- 5: Maschinenluftspalt
- 6: Rotor
- 7: Dynamobleche
- 71: Endblech von 1
- 72: Endblech von 2
- 8: Zahnbreich
- 9: Blechrücken
- 10,11: Statorwicklungsleiter
- 12,12a: Nutverschlusskeile
- 13: Vornut
- 14: Oeffnung in 3a
- 15: keilförmige erste Ausnehmung in 12
- 16: Keilfläche von 15
- 17: Nutwand
- 18: zweite Ausnehmung in 12

## Patentansprüche

1. Statorblechkörper einer elektrischen Maschine mit in Nuten im Statorblechkörper eingelegten und mittels Nutverschlusskeilen (12) darin gehaltenen Statorwicklungsleitern (10,11), wobei die Nutverschlusskeile (12) gegenüber der Statorbohrung zurückversetzt sind, welcher Statorblechkörper aus einzelnen Teilblechkörpern (1,2) besteht, die durch radiale Ventilationskanäle (4) voneinander distanziert sind, wobei zur Distanzierung annähernd radial verlaufende Distanzstege (3) vorgesehen sind, die fest mit einer der beiden einander zugewandten Stirnflächen der Teilblechkörper (1,2) verbunden sind, welche Distanzstege (3) die besagten Ventilationkanäle in eine Vielzahl von Teilkanälen (4a,4b,...) unterteilen, wobei die axial verlaufenden Stege (3a) bzw. Streifen der Distanzstege (3) die Trennung zwischen den Teilkanälen bewirken, dadurch gekennzeichnet, dass am radial innenliegenden Ende des Distanzsteges (3) eine Oeffnung (14) vorgesehen, oder der Distanzsteg (3) dort unterbrochen ist, welche Oeffnung (14) in Umfangsrichtung benachbarte Teilkanäle (4a,4b) miteinander verbindet.

2. Statorblechkörper nach Anspruch 1, dadurch gekennzeichnet, dass die Oeffnungen (14) bzw. Unterbrüche abgeschrägt sind, und die Abschrägung annähernd parallel zur Strömungsrichtung des Kühlgases verläuft.

3. Statorblechkörper nach Anspruch 1 oder 2, dadurch gekennzeichnet, dass die Oeffnung im Distanzsteg (3) annähernd auf der radialen Höhe der Nutverschlusskeile (12) angeordnet sind.

4. Statorblechkörper nach einem der Ansprüche 1 bis 3, dadurch gekennzeichnet, dass der luftspaltseitige Endabschnitt des Distanzsteges (3) in Richtung entgegen der Drehrichtung (R) des Rotors (5) gekrümmt ist, wobei die Krümmung von radial aussen her gesehen annähernd auf der Höhe der Nutverschlusskeile (12) beginnt und bis kurz vor den Maschinenluftspalt (5) reicht.

5. Statorblechkörper nach einem der Ansprüche 1 bis 4, dadurch gekennzeichnet, dass die Nutverschlusskeile (12) im Bereich der Ventilationskanäle (4) eine erste Ausnehmung (15) aufweisen, die sich in Drehrichtung des Rotors (6) stetig erweitert.

6. Statorblechkörper nach Anspruch 5, dadurch gekennzeichnet, dass die Ausnehmung (15) an der einströmseitigen, dem Maschinenluftspalt 5 zugewandten Keilkante beginnt und abströmseitig an der Nutwand (17) endet.

7. Statorblechkörper nach einem der Ansprüche 5 oder 6, dadurch gekennzeichnet, dass die Nutverschlusskeile (12) eine zweite Ausnehmung (18) im Bereich der Ventilationskanäle (4) aufweisen, die dem auslaufenden Ende der ersten Ausnehmung (15) gegenüberliegt und derart ausgebildet ist, dass der Grund der zweiten Ausnehmung (18) annaähernd mit der Wandung (17) der Statornut (16) fluchtet.
